## Europäisches Patentamt
## European Patent Office
## Office européen des brevets

(11) Numéro de publication: **0 139 572**
**B1**

## FASCICULE DE BREVET EUROPÉEN

(45) Date de publication du fascicule du brevet:
26.11.86

(51) Int. Cl.⁴: **B 01 D 21/00, C 02 F 1/52**

(21) Numéro de dépôt: **84401934.9**

(22) Date de dépôt: **27.09.84**

(54) Appareil de traitement des eaux par précipitation, séparation, Epaississement et recirculation des des boues formées.

(30) Priorité: **07.10.83 FR 8315977**

(43) Date de publication de la demande:
**02.05.85 Bulletin 85/18**

(45) Mention de la délivrance du brevet:
**26.11.86 Bulletin 86/48**

(84) Etats contractants désignés:
**BE DE GB IT**

(56) Documents cité:
**EP-A-0 052 245**
**FR-A-2 156 277**
**FR-A-2 345 396**
**FR-A-2 348 156**
**FR-A-2 364 860**
**GB-A-1 583 990**
**GB-A-2 050 185**

(73) Titulaire: **"DEGREMONT" Société dite:, 183, Avenue du 18 Juin 1940, F-92508 Rueil- Malmaison Cédex (FR)**

(72) Inventeur: **Louboutin, Robert, La Duché Route des Flambertins, F-78121 Crespieres (FR)**
Inventeur: **Vion, Patrick, 17, rue de l'Argonne, F-78800 Houilles (FR)**

(74) Mandataire: **Armengaud, Charles, Cabinet ARMENGAUD AINE 3, Avenue Bugeaud, F-75116 Paris (FR)**

LIBER, STOCKHOLM 1986

## Description

La présente invention concerne un appareil de traitement des eaux par floculation et/ou précipitation cristalline, puis par décantation lamellaire avec séparation des boues formées par décantation-épaississement et recirculation d'une partie de ces boues après leur épaississement.

Cet appareil s'applique au traitement de toutes sortes d'eaux : eaux de surface chargées de matières en suspension et colloïdales, eaux résiduaires et en particulier au traitement des eaux chargées en sels minéraux précipitables sous forme de boues cristallines par un réactif tel que la chaux par exemple.

Dans sa demande de brevet FR-A-2 345 396, la Demanderesse a déjà décrit un appareil de traitement des eaux par recirculation, précipitation et séparation des boues formées, comportant dans une même enceinte deux zones, l'une de réaction telle que coagulation, floculation, précipitation cristalline, l'autre de décantation lamellaire, ces zones étant en communication sur toute la largeur de l'appareil et permettant une recirculation interne d'une partie des boues formées.

De nombreux autres appareils ont déjà été décrits, par exemple dans la demande de brevet FR-A-2 348 156 qui comportent un floculateur et un décanteur lamellaire avec recirculation des boues du décanteur vers le floculateur au moyen d'un hydroéjecteur.

Cependant, très souvent, le facteur limitant les performances de ces appareils n'est pas la vitesse de décantation mais le volume de boues produit lors du traitement.

Par ailleurs, leur bon fonctionnement est conditionné par le maintien dans la zone de réaction-floculation d'une concentration correcte en boues amenées par le flux de recirculation et l'obtention d'une telle concentration devient aléatoire au-delà d'un certain débit d'eau traitée correspondant à une vitesse de décantation inférieure à celle théoriquement possible dans la zone de décantation lamellaire.

En effet, à toute augmentation de la vitesse de décantation, et donc du débit d'eau traitée dans un appareil de dimensions données, correspond un accroissement proportionnel de la production de boues et le volume disponible sous les modules lamellaires pour le stockage de ces boues ne pouvant varier, il s'ensuit une impossibilité, sans risque d'engorgement de l'appareil, de respecter pour elles un temps de séjour suffisant sous les modules lamellaires, de façon à assurer leur épaississement pour en obtenir, d'une part la concentration correcte dans le flux de recirculation et, d'autre part, la concentration maximale possible dans celui extrait.

L'approfondissement de l'appareil, de façon à aménager sous les modules un volume suffisant pour le stockage et l'épaississement des boues, ne résoud pas le problème car les performances de l'appareil demeurent alors limitées par la valeur maximale possible du flux horizontal de recirculation, qui, pour maintenir la concentration requise en boues dans la chambre de floculation et de réaction, doit être proportionné au débit d'eau à traiter et on constate qu'à partir d'une certaine valeur de ce flux de recirculation correspondant à un débit de traitement et donc à une vitesse de décantation bien inférieure à celle permise par la présence des modules lamellaires, il se crée sous ces modules des turbulences provoquant une détérioration inacceptable de la qualité de l'eau traitée.

L'appareil suivant l'invention pallie ces inconvénients en permettant un fonctionnement à un débit correspondant à la vitesse de décantation maximale permise par les modules lamellaires, grâce à l'obtention de flocs ou précipités gros et denses, de vitesse de sédimentation élevée et à la suppression du transit horizontal du débit de recirculation dans la zone située sous les modules lamellaires.

L'appareil de traitement des eaux suivant l'invention, comportant dans une même enceinte une pluralité de chambres dont une de réaction telle que coagulation, floculation et/ou précipitation cristalline et une autre de décantation lamellaire, avec recirculation des boues formées vers la chambre de réaction, est caractérisé en ce que, entre la chambre de réaction et la chambre de décantation lamellaire et en communication avec elles est intercalée une chambre intermédiaire d'épaississement des boues, cette chambre étant munie de moyens pour la recirculation vers la chambre de réaction, d'une partie des boues avant leur épaississement maximal, conjointement ou non avec les boues extraites de la chambre de décantation lamellaire et de moyens pour l'extraction des boues en fin d'épaississement.

Conformément à l'invention, la chambre de réaction comporte deux zones: une zone centrale constituée par deux enceintes coaxiales, parallélépipédiques ou cylindriques, l'enceinte interne dans laquelle l'eau à traiter est admise étant équipée d'une hélice à flux essentiellement axial et capable d'induire un débit de 2 à 10 fois celui de l'eau à traiter de manière à assurer une recirculation interne entre ces deux enceintes et une zone péripherique ou latérale de grossissement et de densification du floc dont la concentration est maintenue aux environs de 0,5 à 10 g/l, selon qu'il s'agit d'un traitement de floculation ou de précipitation cristalline, grâce à l'introduction dans l'eau brute de boues en provenance de la chambre intermédiaire d'épaississement des boues.

Egalement suivant l'invention, la chambre intermédiaire d'épaississement des boues présente deux zones, l'une supérieure de transit de l'eau de la zone de réaction vers la zone de décantation lamellaire, l'autre inférieure d'épaississement, cette dernière comportant un collecteur de boues avantageusement équipé d'un dispositif classique, tel que herse et râcleur, permettant d'accroître la concentration des boues épaissies.

Cette chambre intermédiaire permet d'éliminer 85 à 90 % des particules en suspension dans l'eau sortant de la chambre de réaction. En outre, elle permet d'obtenir des boues dont la concentration au point le plus bas de la chambre peut atteindre 80 à 100 g/l dans le cas d'un traitement de floculation et 300 à 500 g/l dans le cas d'un traitement de précipitation cristalline.

Conformément à l'invention, la chambre intermédiaire est munie de moyens destinés à la recirculation d'une partie des boues formées dans cette chambre vers la chambre de réaction de façon à y obtenir une concentration optimale des boues, lesdits moyens consistant en au moins une tuyauterie disposée entre la moitié et le tiers supérieur de la hauteur de la zone d'épaississement et reliée soit à l'aspiration d'une pompe de recyclage, soit à celle d'un éjecteur, disposés sur la tuyauterie d'amenée d'eau brute à la chambre de réaction.

On a décrit ci-après, uniquement à titre d'exemple non limitatif, une forme de réalisation d'un appareil suivant l'invention, cette description étant faite en référence aux dessins annexés sur lesquels:

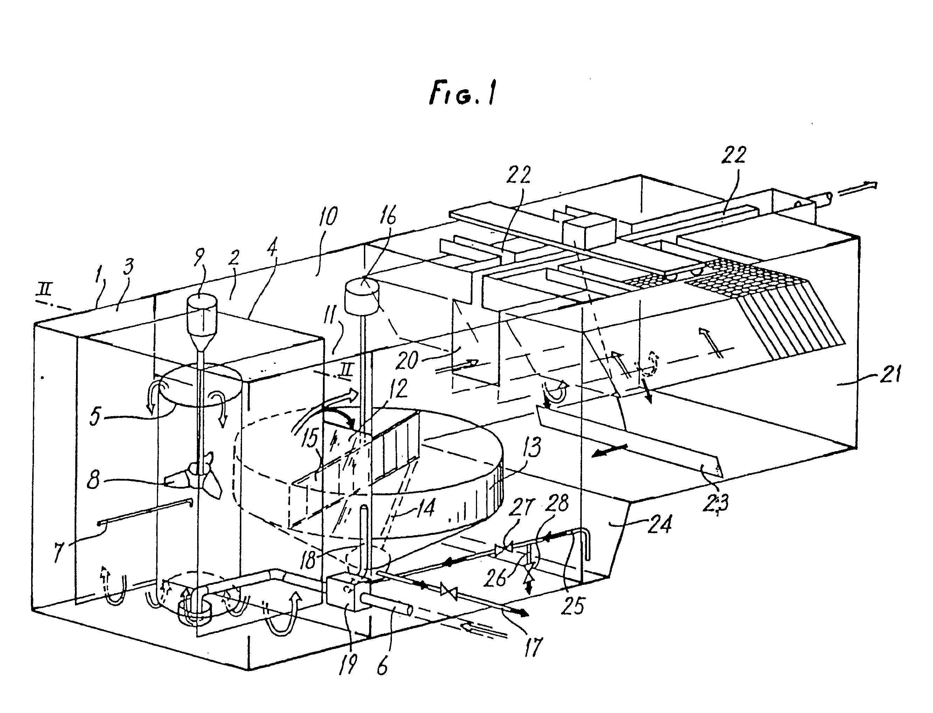

la figure 1 représente un tel appareil en perspective arrachée, les flèches sombres montrant le trajet des boues, les flèches claires celui de l'eau, et

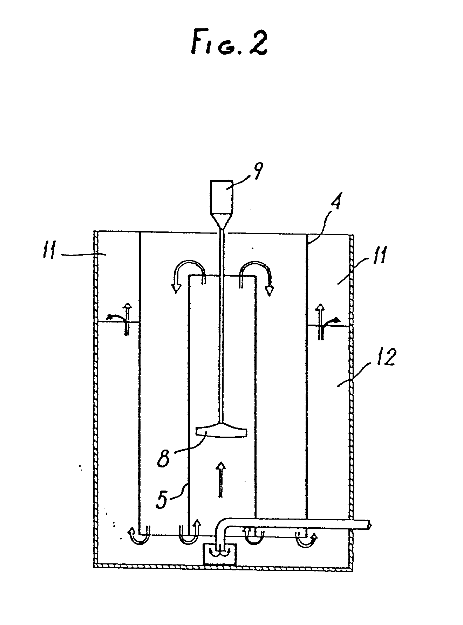

la figure 2 est une coupe suivant II/II de la figure 1.

L'appareil comporte une chambre de réaction 1 organisée de façon à présenter deux zones: une zone centrale 2 et, régnant de part et d'autre de cette zone, une zone périphérique ou latérale 3. Dans l'exemple traité, la zone centrale 2 est constituée par deux enceintes coaxiales l'une parallélépipédique 4, l'autre cylindrique 5. L'eau à traiter, additionnée des réactifs nécessaires au traitement et à laquelle sont mélangées les boues recyclées, dans les conditions que l'on verra plus loin, est introduite par la canalisation 6 à la base de l'enceinte interne cylindrique 5. Un adjuvant, polymère par exemple, est amené dans cette enceinte par une tuyauterie 7. Dans l'enceinte cylindrique interne est disposée une hélice 8 à flux axial, entraînée par un groupe 9. Cette hélice est calculée de façon à induire dans l'enceinte 5 un débit très important de la liqueur, de l'ordre de 2 à 10 fois celui sous lequel elle est introduite dans cette enceinte. Il se crée ainsi une recirculation intense entre les deux enceintes, ce qui assure un contact intime entre l'eau, les réactifs et les boues introduites à la base de l'enceinte interne. De l'enceinte extérieure le mélange eau-boues passe dans la zone périphérique 3 qui constitue une zone de floculation lente permettant la formation de gros flocons denses qui passent dans la chambre intermédiaire 10 par des orifices 11 formant déversoirs, prévus à la partie supérieure d'un cloisonnement 12 séparant la chambre de réaction 1 de la chambre intermédiaire 10. Cette chambre intermédiaire 10 est munie d'un collecteur de boues 13 cylindro-conique équipé d'un râcleur 14 et d'une herse 15 entraînés par un groupe 16 et destinés à favoriser l'épaississement des boues décantées. Une tuyauterie 17 prévue à la base du collecteur 13 sert à l'évacuation des boues épaissies.

Une tuyauterie 18 prévue à une hauteur intermédiaire dans la chambre 10 est reliée à un dispositif de recirculation, tel que par exemple une pompe 19, interposée sur la canalisation 6 d'amenée de l'eau à traiter à la partie inférieure de l'enceinte cylindrique interne 5 de la chambre de réaction 1. L'eau sortant de la chambre 10, dont la teneur en matières en suspension est, grâce aux dispositions adoptées suivant l'invention, réduite de 85 à 90 %, pénètre par l'orifice 20 dans la chambre de décantation lamellaire 21 où a lieu le finissage de la décantation et à la partie supérieure de laquelle l'eau est reprise par les goulottes 22.

Cette chambre de décantation lamellaire peut avantageusement comporter à sa partie inférieure un dispositif de râclage 23 permettant de ramener les boues décantées dans une ou plusieurs fosses de concentration 24, à partir desquelles grâce au jeu de tuyauteries 25 et 26, et des vannes 27 et 28 qui les équipent, elles peuvent être soit évacuées à l'égoût, soit recyclées conjointement avec les boues extraites de la chambre intermédiaire 10.

Des mesures comparatives ont été faites sur deux appareils ayant une surface de décantation lamellaire identique et traitant en parallèle une même eau (eau de surface), par addition d'une même dose de réactif minéral coagulant et de polymère. L'un de ces appareils (n° 1) comportait une recirculation classique interne des boues, l'autre (n° 2) était conforme à la présente invention.

Les résultats suivants ont été obtenus:
Appareil n° 1 Appareil n° 2
- Vistesse de décantation dans la zone lamellaire 17 m/h 35 m/h
- Teneur moyenne en matières en suspension de l'eau traitée 4 mg/l 3,6 mg/l
- Concentration moyenne des boues extraites 19 g/l 60 g/l

**Revendications**

1. Appareil de traitement des eaux comportant dans une même enceinte une pluralité de chambres dont une de réaction, telle que floculation et/ou précipitation cristalline et une autre de décantation lamellaire avec recirculation des boues formées vers la chambre de réaction, caractérisé en ce que, entre la chambre de réaction (1) et la chambre de décantation lamellaire (21) et en communication avec elles, est intercalée une chambre intermédiaire (10) d'épaississement des boues, cette chambre étant munie de moyens (18, 19) pour la recirculation, vers la chambre de réaction, d'une partie des boues avant leur épaississement maximal, conjointement ou non avec les boues extraites de la chambre de décantation lamellaire et de moyens (17) pour l'extraction des boues en fin d'épaississement.

2. Appareil suivant la revendication 1, caractérisé en ce que la chambre de réaction comporte deux zones : une zone centrale (2) constituée par deux enceintes coaxiales (4, 5) et une zone latérale ou périphérique (3) située de part et d'autre de la zone centrale et communiquant avec la chambre intermédiaire (10) d' épaississement des boues.

3. Appareil suivant la revendication 2, caractérisé en ce que l'enceinte interne (5) de la zone centrale (2) est de forme cylindrique et l'enceinte externe (4) de cette zone est de forme parallélépipédique.

4. Appareil suivant l'une quelconque des revendications précédentes, caractérisé en ce que l'enceinte interne (5) de la chambre de réaction, à la partie inférieure de laquelle est introduite l'eau à traiter additionnée des réactifs nécessaires au traitement et dans laquelle sont recyclées, au moins partiellement, les boues formées au cours du traitement, est munie d'au moins un moyen tel qu' hélice à flux axial (8) calculé de façon à induire un débit de 2 à 10 fois supérieur à celui de l'eau à traiter, assurant une recirculation intense du mélange eau-boues entre les deux enceintes, son passage dans la zone périphérique déterminant un grossissement du floc qui, de cette zone, passe dans la chambre intermédiaire (10) d'épaississement des boues.

5. Appareil suivant l'une quelconque des revendications précédentes, caractérisé en ce que la chambre intermédiaire (10) d' épaississement des boues est munie d'au moins un collecteur (13) de boues cylindro-conique équipé de dispositifs tels que herse (14) et râcleur (15) améliorant le degré d'épaississement des boues.

6. Appareil suivant la revendication 4, caractérisé en ce que les moyens servant au recyclage des boues dans l'eau à traiter consistent en au moins une tuyauterie (18) ouverte entre la moitié et le tiers supérieur de la hauteur de la chambre ( 10) reliée à l'aspiration d'un moyen tel que pompe (19) ou éjecteur prévu sur la canalisation (6) d'amenée de l'eau à traiter à la base de l'enceinte interne (5) de la zone centrale de la chambre de réaction (1).

7. Appareil suivant l'une quelconque des revendications précédentes, caractérisé en ce qu'il présente au moins une fosse (24) de concentration des boues provenant de la chambre de décantation lamellaire (21), fosse de laquelle ces boues sont, par le moyen de canalisations (25, 26) munies de vannes (27, 28), soit rejetées à l'égoût, soit recyclées dans la chambre de réaction (1) avec l'eau à traiter conjointement avec les boues prélevées dans la chambre intermédiaire (10) par la tuyauterie (18).

## Claims

1. An apparatus for the treatment of water, comprising a single housing containing a plurality of chambers one of which is a reaction chamber for reactions such as flocculation and/or crystalline precipitation, and another of which is a lamellar sedimentation chamber with recirculation of the sludge formed to the reaction chamber, characterized in that an intermediate, sludge thickening chamber (10) is interposed between and connected to the reaction chamber (1) and the lamellar sedimentation chamber (21), this intermediate chamber being equipped with means (18, 19) for effecting the recirculation to the reaction chamber of part of the sludge before its maximal thickening, in conjunction or not with the sludge extracted from the lamellar sedimentation chamber, and means (17) for extracting sludge at the end of the thickening process.

2. An apparatus according to claim 1, characterized in that the reaction chamber comprises two zones: a central zone (2) consisting of two coaxial housings (4,5) and a lateral or peripheral zone (3) situated on both sides of the central zone and in communication with the intermediate thickening chamber (10).

3. An apparatus according to claim 2, characterized in that the inner housing (5) of the central zone (2) is cylindrical in shape and the outer housing (4) of this zone is parallelepipedic.

4. An apparatus according to any one of the preceding claims, characterized in that the inner housing (5) of the reaction chamber, at the lower part of which is introduced the water to be treated plus the reagents needed for this treatment and in which the sludge formed during the treatment is at least partially recycled, is provided with at least one axial flow means (8) such as a propeller designed to induce a flow rate two to ten times greater than that of the water to be treated, ensuring an intense recirculation of the water/sludge mixture between the two housings, its passage through the peripheral zone causing an enlargement of the floc, which passes from this zone into the intermediate, sludge thickening chamber (10).

5. An apparatus according to any one of the preceding claims, characterized in that the intermediate, sludge thickening chamber (10) is provided with at least one cylindro-conical sludge collector (13) equipped with devices such as a harrow (14) and a scraper (15) which improve the degree of sludge thickening.

6. An apparatus according to claim 4, characterized in that the means for recycling the sludge in the water to be treated consist of at least one open pipe (18) arranged between half and two-thirds of the way up the chamber (10) and connected to the suction side of a means such as a pump (19) or an ejector provided in the pipe-line (6) which brings the water to be treated to the base of the inner housing (5) of the central zone of the reaction chamber (1).

7. An apparatus according to any one of the preceding claims, characterized in that it has at least one concentration tank (24) for the sludge coming from the lamellar sedimentation chamber (21), from which tank this sludge is, by means of pipe-lines (25, 26) fitted with valves (27, 28), either discharged to the sewer, or recycled in the reaction chamber (1) with the water to be treated and in conjunction with the sludge taken from the intermediate chamber (10) by the pipe (18).

**Patentansprüche**

1. Vorrichtung zur Behandlung von Abwässern, mit einer Anzahl von Kammern im selben Gehäuse, umfassend eine Reaktionskammer, insbesondere zur Ausflockung und/oder kristallinen Ausfällung und einer anderen Kammer für lamellares Dekantieren mit Rückführung der gebildeten Schlämme zur Reaktionskammer,

dadurch gekennzeichnet,

daß zwischen der Reaktionskammer (1) und der Dekantierkammer (21) und in Verbindung mit diesen eine Zwischenkammer (10) für die Verdickung der Schlämme zwischengeschaltet ist, welche mit Einrichtungen (18, 19) für die Rezirkulation eines Teils der Schlämme vor ihrer maximalen Verdickung, zusammen oder nicht zusammen mit den von der Kammer für das lamellare Dekantieren abgezogenen Schlämmen, zur Reaktionskammer und mit Einrichtungen (17) zum Abzug der Schlämme am Ende der Verdickung versehen ist.

2. Vorrichtung nach Anspruch 1,

dadurch gekennzeichnet,

daß die Reaktionskammer zwei Zonen aufweist, nämlich eine durch zwei koaxiale Gehäuse (4, 5) gebildete zentrale Zone (2) und eine seitliche Zone oder Umfangszone (3), welche beiderseits der zentralen Zone angeordnet und mit der Zwischenkammer (10) zur Verdickung der Schlämme verbunden ist.

3. Vorrichtung nach Anspruch 2,

dadurch gekennzeichnet,

daß das Innengehäuse (5) der zentralen Zone (2) zylindrisch und das Außengehäuse (4) dieser Zone parallelepipedisch ausgebildet ist.

4. Vorrichtung nach einem der vorhergehenden Ansprüche,

dadurch gekennzeichnet,

daß das Innengehäuse (5) der Reaktionskammer, an dessen unterem Abschnitt das zu behandelnde Wasser zugeführt wird, welchem für die Behandlung erforderliche Reagentien zugesetzt sind, und in welchem mindestens teilweise im Lauf der Behandlung gebildete Schlämme zugeführt sind, mit mindestens einer Einrichtung, wie einem axial fördernden Rührer (8), versehen ist, welcher derart bemessen ist, daß er eine Menge von 2 bis 10 mal größer als die des zu behandelnden Wassers einführt, um eine intensive Umwälzung der Mischung aus Wasser und Schlämmen zwischen den beiden Gehäusen sowie den Übertritt in die Umfangszone sicherstellt, welche die Vergrößerung der Flocken bestimmt, die von dieser Zone in die Zwischenkammer (10) für die Verdickung der Schlämme gelangen.

5. Vorrichtung nach einem der vorhergehenden Ansprüche,

dadurch gekennzeichnet,

daß die Zwischenkammer (10) für die Verdickung der Schlämme mit mindestens einem kegelzylindrischen Sammler (13) für die Schlämme versehen ist, welcher Mittel, insbesondere Abstreifer (15) und Rechen (14) zur Verbesserung des Verdickungsgrads der Schlämme aufweist.

6. Vorrichtung nach Anspruch 4,

dadurch gekennzeichnet,

daß die Einrichtungen zum Rezirkulieren der Schlämme in das zu behandelnde Wasser mindestens eine Rohrleitung (18) aufweisen, die zwischen der Hälfte und einem Drittel der Höhe der Kammer (10) ausmündet und mit einer Saugeinrichtung, wie einer Pumpe (19) oder einem Ejektor verbunden ist, welche auf der Leitung (6) für die Zufuhr von zu behandelndem Wasser zur Basis des Innengehäuses (5) der zentralen Zone der Reaktionskammer (1) vorgesehen ist.

7. Vorrichtung nach einem der vorhergehenden Ansprüche,

dadurch gekennzeichnet,

daß die Vorrichtung mindestens eine Grube (24) für die Konzentration von aus der Dekantierkammer (21) herrührenden Schlämmen aufweist, von welcher die Schlämme durch mit Ventilen (27, 28) versehenen Leitungen (25, 26) zum Ablauf geführt oder in die Reaktionskammer (1) mit dem zu behandelnden Wasser gemeinsam mit den aus der Zwischenkammer (10) durch die Rohrleitung (18) entnommenen Schlämmen rezirkuliert werden.

FIG.1

# Fig. 2